# EUROPÄISCHE PATENTSCHRIFT

(11) **EP 3 322 323 B1**
(45) Veröffentlichungstag und Bekanntmachung des Hinweises auf die Patenterteilung: **22.05.2019**
(21) Anmeldenummer: 16727930.6
(22) Anmeldetag: 07.04.2016
(51) Int. Cl.: A47L 1/02, B08B 1/00, E04G 23/00

(54) **REINIGUNGSVORRICHTUNG SOWIE VERFAHREN ZUM REINIGEN EINER FLÄCHE**
CLEANING DEVICE AND METHOD FOR CLEANING A SURFACE
DISPOSITIF DE NETTOYAGE ET PROCÉDÉ POUR NETTOYER UNE SURFACE

(30) Priorität: 14.07.2015 DE 102015008859; 15.01.2016 DE 102016000295
(43) Veröffentlichungstag der Anmeldung: 23.05.2018
(73) Patentinhaber: Gebäudereinigung Lissowski GmbH, 52070 Aachen (DE)
(72) Erfinder: BÖHME, Uwe, 52072 Aachen (DE)
(74) Vertreter: Castell, Klaus
(86) Internationale Anmeldenummer: PCT/DE2016/000145
(87) Internationale Veröffentlichungsnummer: WO 2017/008776

(56) Entgegenhaltungen:
- EP-A1- 2 211 002
- EP-A1- 3 031 538
- WO-A1-2016/004914
- WO-A2-2013/076711
- DE-A1-102009 048 778
- JP-A- 2003 026 097
- KR-A- 20030 025 662
- US-A- 5 890 250
- US-A1- 2016 052 026

## Beschreibung

Die Erfindung betrifft eine frei schwebende Reinigungsvorrichtung zum Reinigen einer Fläche ohne feste Verbindung zwischen der Reinigungsvorrichtung und der Fläche. Insbesondere betrifft die Erfindung eine Vorrichtung zum Reinigen von ebenen Flächen, wie beispielsweise von Glasflächen oder Fassadenelementen. Solche Vorrichtungen sind aus der KR-A-2001/0025662 und der WO-A-2013/076711 bekannt.

Das Reinigen von Glasscheiben an deren Innenseite, insbesondere auch an deren Außenseite, ist bei großen Glasflächen besonders schwierig. In hohen Räumen müssen für die Reinigung von Glasflächen verfahrbare Gestelle aufgebaut werden, die es ermöglichen, die zu reinigenden Flächen zu erreichen. An Außenfassaden werden waagerecht und senkrecht verfahrbare Arbeitskanzeln eingesetzt, um es den Glas- und/oder Fassadenreinigern zu ermöglichen, schwererreichbare Scheiben zu putzen.

Die einheitliche Gestaltung von Außenfassaden hat zufolge, dass neben den Glasflächen der Fensterscheiben auch weitere plane Flächen der Innenseite von Gebäuden regelmäßig gereinigt werden müssen.

Die Reinigung dieser Flächen ist aufwändig und führt zu hohen Kosten bei der Instandhaltung von Gebäuden.

Die DE 10 2013 104 447 A1 beschreibt eine Reinigungseinrichtung mit einem selbstkletternden Fahrwerk. Derartige Reinigungseinrichtungen sind wegen des hohen mechanischen Aufwands und der Gefahr von Verschmutzungen durch die Saugnäpfe nur für bestimmte Einsatzzwecke geeignet.

Die WO 2013/076 711 A2 beschreibt einen Helikopter zum Reinigen von Fassadenflächen. Dieser ist jedoch nicht dazu geeignet, frei zu schweben und benötigt daher eine Seilverbindung zu einem ortsfesten Punkt.

Der Erfindung liegt daher die Aufgabe zu Grunde, eine derartige Reinigungsvorrichtung so auszubilden, dass es für den Glas- und/oder Fassadenreiniger leichter ist, auch schwererreichbare Fenster oder Fassadeflächen zu reinigen.

Diese Aufgabe wird mit einer Reinigungsvorrichtung mit den Merkmalen des Patentanspruchs 1 gelöst.

Der Erfindung liegt die Erkenntnis zu Grunde, dass nicht der Glas- und/oder Fassadenreiniger mit seinem Reinigungsgerät an die zu reinigende Fläche gebracht werden muss, sondern dass es ausreicht, nur das Reinigungsgerät zu der zu reinigenden Fläche zu transportieren. Sofern dieses Reinigungsgerät als Reinigungseinrichtung an einem Flugkörper befestigt ist, kann mit einer Fernsteuerung der Flugkörper in die Nähe der zu reinigenden Fläche gebracht werden, damit mittels der Reinigungseinrichtung die zu reinigende Fläche gereinigt werden kann. Hierbei eignen sich Flugkörper mit Rotoren zur Positionierung der Reinigungseinrichtung. Diese Flugkörper können auch autonom oder teilautonom operieren.

Derartige Flugkörper mit Rotoren sind als UAV oder Multicopter bekannt. Besonders geeignet sind teilautonöme Multicoptersysteme zur Glas- und Fassadenreinigung im Innen- und Außenbereich. Die zu reinigenden Flächen sind insbesondere vertikale Flächen im Innen- und Außenbereich von Gebäuden. Es können jedoch auch geneigte, waagerechte oder gebogene Flächen mittels der Reinigungsvorrichtung gereinigt werden. Eine einfache Ausführungsform einer derartigen Reinigungsvorrichtung ist ein Quadro- oder Hexacopter mit einem Achsabstand der Rotoren von etwa 1100 mm. Das gesamte Flugobjekt hat damit eine waagerechte Ausdehnung von 80 cm bis 120 cm und eine Aufbauhöhe von 60 cm bis 80 cm.

Der Flugkörper ist leicht und kompakt aufgebaut und gewichtssparend konzipiert. Die Implementierung des Bürstensystems sowie der verwendeten Sensorik erfolgt unter aerodynamischen Gesichtspunkten. Dabei werden die zusätzlich mitgeführten Komponenten, das heißt insbesondere der Reinigungseinrichtung so konzipiert, dass der Einfluss auf die Manövrierfähigkeit minimiert ist.

Die Reinigungseinrichtung kann entionisiertes Wasser sprühen.

Die Reinigungseinrichtung kann eine Sprüheinrichtung für Wasser, Trockeneis, entmineralisiertes / entionisiertes Wasser aufweisen. Vorteilhaft ist es, wenn die Reinigungseinrichtung mindestens eine rotierende Bürste aufweist. Dies ermöglicht es, neben der Bewegung der Reinigungseinrichtung relativ zu der zu reinigenden Fläche den abrasiven Effekt der Reinigungsvorrichtung zu verstärken und dadurch eine höhere Reinigungsleistung zu erzielen. Ein Abstreifer oder ein Schaber können helfen, besonders hartnäckigen Schmutz zu entfernen.

Um die Pose des Flugkörpers und das Reinigungsergebnis zu überprüfen, wird vorgeschlagen, dass die Reinigungsvorrichtung eine Kamera aufweist. Dies ermöglicht es, einen Fensterreiniger, der sich weitentfernt von dem Flugkörper aufhält, an einem Bildschirm die Reinigung zu überprüfen.

Eine Weiterbildung der Reinigungsvorrichtung sieht vor, dass der Flugkörper einen Sicherheitsrahmen zum Schutz der Rotoren aufweist. Dieser Sicherheitsrahmen schützt nicht nur die Rotoren, sondern auch die zu reinigende Fläche und den Bediener der Reinigungsvorrichtung. Vorteilhaft ist es, wenn der komplette Frame des Multicopters mit einem Styroporkern ausgestattet wird, welcher als Rahmen fungiert.

Um den Abstand des Flugkörpers zu der zu reinigenden Fläche zu ermitteln wird vorgeschlagen, dass der Flugkörper eine Sensorik zur Abstandsmessung und / oder Kontaktdetektion aufweist. Diese Sensorik ist vorzugweise am Sicherheitsrahmen des Flugkörpers angeordnet. Hierfür sind Näherungs- und Tastsensoren vorgesehen, um aktiv auf die Annäherung an ein Objekt oder auf eine direkte Berührung des Flugkörpers mit einem Objekt zu reagieren. Das Objekt kann auch eine aus Glas bestehende zu reinigende Fläche sein. Hierzu können spezielle Sensoren zur Erkennung von Glas genutzt werden, wie z.B. Ultraschallsensoren.

Eine besonders gute Reinigungswirkung kann mit einem Bürstensystem erzielt werden, das fest mit dem Flugkörper verbunden ist. Dieses Bürstensystem besteht vorzugsweise aus mehreren rotierenden Walzenbürsten, deren Achsen von Elektromotoren angetrieben sind.

Vorteilhaft ist es, wenn die Reinigungsvorrichtung eine auf Rollen oder Kugeln verfahrbare Einrichtung aufweist. Ein fester Abstand zwischen Achsen von Walzenbürsten und einer Reinigungsfläche kann beispielsweise durch freilaufende Kunststoffrollen gewährleistet sein. Dies führt dazu, dass die Kontaktpunkte zwischen dem Flugkörper und der zu reinigenden Fläche durch die feste räumliche Anordnung der Rollen vorgegeben ist. Dabei kann die Anordnung der Rollen so gewählt werden, dass bei einem Kontakt eine Fixierung der Pose des Flugkörpers relativ zur Reinigungsfläche stattfindet. Hierdurch kann die Reinigungsvorrichtung, auch während der Bewegung des Flugkörpers, eine konstante Reinigungsleistung gewährleisten.

Die erfindungsgemäße Ausbildung der Reinigungsvorrichtung sieht vor, dass die Reinigungseinrichtung beweglich zum Flugkörper angeordnet ist und der Flugkörper einen Abstandsmesser aufweist, der den Abstand der Reinigungseinrichtung zum Flugkörper misst. Bei einer Vorrichtungsvariante ist die Reinigungseinrichtung ebenfalls beweglich zum Flugkörper angeordnet und der Flugkörper weist eine Druckmesseinrichtung auf, die den von der Reinigungseinrichtung auf den Flugkörper wirkenden Druck misst.

Die Reinigungsvorrichtung kann neben Kameras folgende weitere Sensoren aufweisen: inertiale Messeinheiten (IMU), GPS, Magnetometer, Kamera, 1D-LIDAR, 2D-LIDAR, mechanische Endschalter und Näherungsschalter sowie Ultraschallmessgeräte. Die Daten dieser Sensoren können zur Steuerung und zur Lokalisierung und Navigation des Flugkörpers entlang der Reinigungsfläche genutzt werden. Die Auswertung von Kamerabildern ermöglicht außerdem eine qualitative Bewertung des Reinigungsvorgangs.

Die der Erfindung zu Grunde liegende Aufgabe wird auch mit einem Verfahren zum Reinigen von Flächen, insbesondere von Fassaden und von Glasfronten im Außenbereich, gelöst, bei dem mit einem Flugkörper ein Reinigungsmedium zur Reinigung auf die zu reinigende Fläche aufgebracht wird.

Vorteilhaft ist eine teilautonome Steuerung des Flugkörpers, die einen automatischen oder teilautomatischen Start- und Landevorgang ermöglicht. Hierdurch kann beispielsweise das Auffüllen eines Wassertanks oder das Austauschen eines Akkus schnell vorgenommen werden. Die Steuerung kann den Flugkörper nach dem ersten Start in einer festgelegten Distanz zur Reinigungsfläche stabilisieren. Der Bediener muss dann lediglich ausgehend von dieser Pose den zu reinigenden Bereich festlegen. Die Steuerung berechnet einen entsprechenden Pfad und stabilisiert den Flugkörper entlang der Reinigungsfläche. Wenn der Wasservorrat erschöpft ist oder sich der Ladestand der Akkus einem kritisch niedrigen Wert nähert, wird ein automatischer Landevorgang eingeleitet, um Akkus austauschen bzw. Wasser auffüllen zu können. Wenn der jeweilige Mangel beseitigt ist, kehrt der Flugkörper automatisch an seine vorherige Pose relativ zur Reinigungsfläche zurück.

Vorteilhaft ist es, wenn mehrere Flugkörper verwendet werden. Dann kann ein Flugkörper mit seiner Reinigungseinrichtung die Reinigungsfläche bearbeiten bis die Acculadung oder der Wasservorrat erschöpft ist. Dann fliegt der erste Reinigungsvorrichtung mit Flugkörper und Reinigungseinrichtung zurück, um Accus und/oder den Wasservorrat zu füllen, und eine zweite Reinigungsvorrichtung fliegt an diejenige Stelle, an der die erste Reinigungsvorrichtung die Bearbeitung beendet hat. Bei größeren zu reinigenden Flächen kann die zweite Reinigungsvorrichtung bereits losfliegen, während die erste noch arbeitet, damit möglichst wenig Zeit zwischen der Bearbeitung mit er ersten Reinigungsvorrichtung und der Bearbeitung mit der zweiten Reinigungsvorrichtung liegt und ein quasikontinuierliche Reinigung erreicht wird.

Für sehr große Gebäude wird ein Schwarm an Reinigungsvorrichtungen vorgeschlagen. Dies ermöglicht es gleichzeitig mit mehreren Reinigungsvorrichtungen zu reinigen. Dabei können auch weniger Landeplätze als Reinigungsvorrichtungen vorhanden sein, da die Verweilzeit am Landeplatz wesentlich kürzer sein sollte als die Reinigungszeit.

Bei mehreren Flugkörpern ist es vorteilhaft, wenn diese direkt miteinander oder über eine zentrale Steuerung kommunizieren. Dadurch wird sichergestellt, dass weder Flächen doppelt gereinigt werden noch Flächen ungereinigt bleiben.

Es kann auch ein Pool an Flugkörpern und ein Pool an Reinigungseinrichtungen bereitgestellt werden. Dies ermöglicht es, Flugkörper und Reinigungseinrichtung je nach Bedarf zu koppeln. Zum Beispiel können eine Reinigungseinrichtung mit einer Bürste und eine andere Reinigungseinrichtung mit einer Wassersprüheinrichtung ausgerüstet sein. Der Flugkörper kann dann je nach Bedarf mit der passenden Reinigungseinrichtung gekoppelt werden. Insbesondere mehrere Flugkörper und mehrere vorzugsweise unterschiedliche Reinigungseinrichtungen ermöglichen einen effektiven Reinigungsvorgang.

Während eine Reinigungsperson zur Reinigung einer größeren Fassade alle Reinigungswerkzeuge und alle Reinigungsmittel bei sich haben sollte, erschließt das erfindungsgemäße Konzept eine Möglichkeit, die Reinigungsvorrichtung bedarfsgerecht auszurüsten und auch schnell umzurüsten. Die Beobachtung der zu reinigenden Fläche während ihrer Bearbeitung und die Speicherung der Daten ermöglicht es, auch Flächen mit hartnäckigem Schmutz als Ort zu definieren, um genau diese Flächen anschließend mit einer anderen Reinigungseinrichtung nachzubearbeiten. Dafür kann ein Flugkörper nach einer ersten Reinigung genau diejenigen Stellen anfliegen, die - vorzugsweise mit einem anderen Reinigungsmittel und/ einer anderen Reinigungseinrichtung - nachbearbeitet werden sollen.

Als Reinigungsmedium kann entionisiertes Wasser eingesetzt werden. Es ist zwar beispielsweise aus der DE 20 2004 009 740 U1 bekannt, zum Reinigen von Oberflächen ionisiertes Wasser einzusetzen, damit das Abziehen und Trocknen wegfallen kann. Die Verwendung von ionisiertem Wasser in Verbindung mit einer frei fliegenden Reinigungsvorrichtung führt jedoch zu dem Vorteil, dass bei einer Reinigung von oben nach unten die unteren Bereiche durch das herabfließende Wasser bereits vorgereinigt werden können und durch den Wind der Rotoren des Flugkörpers eine sehr schnelle Abtrocknung des anhaftenden Wasserfilms erzielt wird. Mit diesem Wasser kann ein Bürstensystem versorgt werden, um die zu reinigende Fläche zu befeuchten und zu spülen.

Alternativ oder kumulativ kann als Reinigungsmedium Trockeneis eingesetzt werden. Durch Trockeneis (CO₂-Pellets), welches beispielsweise auf Fassaden aufgesprüht wird, entsteht eine Unterkühlung. In Verbindung mit rotierenden Bürsten führt dies zum Abplatzen der Verschmutzungen, welche zu Boden fallen. Die DE 20 2013 105 041 U1 beschreibt zwar den prinzipiellen Einsatz von Trockeneis zur Reinigung von besonders stark verschmutzten Oberflächen mittels eine Sprühpistole. Gerade der Einsatz in Verbindung mit einem Flugkörper und einer Bürste führt dazu, dass das Trockeneis mit dem Wind der Rotoren an die Oberfläche gepresst wird, dort reagiert und keine Rückstände hinterlässt.

Das Trockeneis löst sich beim Auftreffen auf ein Hindernis wie beispielsweise eine Glasscheibe oder eine Fassade in gasförmige Bestandteile auf, so dass keine Nässe entsteht oder zurückbleibt.

Um einerseits keine Scheibe zu beschädigen und andererseits auch einen gewissen Druck von der Reinigungseinrichtung auf die zu reinigende Fläche ausüben zu können, wird vorgeschlagen, dass die relative Pose des Flugkörpers in Bezug auf die zu reinigende Fläche gemessen wird.

Kumulativ oder alternativ wird vorgeschlagen, dass die absolute Pose des Flugkörpers in Bezug auf die zu reinigende Fassade gemessen wird. Dazu können stationäre Fixpunkte beispielsweise am Boden oder an der Fassade als Bezugssystem dienen, um an einem Gebäude die Pose der zu reinigenden Flächen festzulegen. Fixpunkte an der Fassade können beispielsweise Eckpunkte des Gebäudes sein. Es kann aber auch vor dem Gebäude ein Teppich mit definierten Punkten ausgelegt werden. Die Pose der Reinigungseinrichtung kann dann während des Fluges relativ zu diesen definierten Punkten ermittelt werden. Dies ermöglicht es, bei einem Kontakt mit einer zu reinigenden Fläche die Kontaktpunkte in Relation zu den definierten Punkten zu bestimmen. Außerdem erleichtert ein derartiger Teppich vor dem Gebäude das automatische Starten und Landen der Reinigungsvorrichtung auf diesem Teppich.

Vorteilhaft ist es, wenn der Flugkörper derart gegen die zu reinigende Fläche geflogen wird, dass eine am Flugkörper befestigte Reinigungseinrichtung gegen die zu reinigende Fläche gedrückt und an der Fläche entlang bewegt wird. Hierzu hält die Steuerung den Multicopter in einem bestimmten Neigungswinkel in Relation zur reinigenden Fläche von einigen Grad. Man spricht hierbei auch vom Pitch Winkel.. Beim Aufprall auf der zu reinigenden Fläche entsteht ein Druck zwischen der zu reinigenden Fläche und der anliegenden Reinigungsvorrichtung. Dieser Druck wird beispielsweise als Anpressdruck für Reinigungsbürsten verwendet, um einen dauerhaften Kontakt zwischen Reinigungsbürste und zu reinigender Fläche zu gewährleisten. Er kann aber auch den Impuls ausgleichen, der die Reinigungsvorrichtung beim Sprühen einer Reinigungsflüssigkeit gegen die zu reinigende Fläche von der zu reinigenden Fläche weg drückt.

Der Flugkörper kann auch mit Schwung gegen die zu reinigende Fläche geflogen werden. Dies erhöht den Druck einer Reinigungsbürste oder eines Schabers gegen die zu reinigende Fläche. Der Schwung kann jedoch auch durch den Impuls abgeschwächt werden, der entsteht, wenn die Reinigungseinrichtung Flüssigkeit gegen die zu reinigende Fläche sprüht.

Ein Reinigungssystem weist eine Reinigungsvorrichtung, mehrere zu reinigende Flächen und eine die zu reinigenden Flächen umgebende Topologie auf. In einem Datenspeicher werden Bezugspunkte der Topologie gespeichert und es werden einerseits die Pose der Reinigungsvorrichtung relativ zu diesen Bezugspunkten und andererseits die Pose der Reinigungsvorrichtung in Bezug auf die zu reinigende Fläche ermittelt, um die Reinigungseinrichtung automatisch an den zu reinigenden Flächen entlang zu führen.

Dies ermöglicht es, mit einer Reinigungsvorrichtung auch größere Fassaden autonom zu reinigen. Je nach Größe der Flugeinrichtung und Verschmutzung der Fassade werden die zu reinigenden Flächen einmal oder mehrmals angeflogen, um sie mit Reinigungsflüssigkeit zu benetzen, die Oberfläche zu bürsten, Schmutzpartikel abzulösen, Schmutz abzuspülen und gegebenenfalls sogar mit Warmluft zu trocknen oder eine schmutzabweisende Schicht aufzusprühen.

Für ein Hochhaus kann somit eine Reinigungsvorrichtung derart programmiert werden, dass sie autonom nach und nach alle zu reinigenden Flächen reinigt und dann wieder am Anfang beginnt oder bestimmte Flächen häufiger und andere Flächen weniger häufig reinigt. Der Flugkörper bewegt dabei die Reinigungseinrichtung von einer Reinigungsmittelaufnahmestation zur zu reinigenden Fläche, dann während der Reinigung relativ zur zu reinigenden Fläche und wieder zurück, um neues Reinigungsmittel aufzunehmen. Die Reinigungsmittelaufnahmestation und eine geschützte Behausung für den Flugkörper und die Reinigungseinrichtung können dabei beispielsweise auf dem Dach des Hochhauses vorgesehen werden.

Es ist auch möglich, den Flugkörper mit unterschiedlichen Reinigungseinrichtungen zu koppeln, um beispielsweise in einem ersten Arbeitsgang die zu reinigende Fläche nur zu besprühen, sodass sich der Schmutz löst, und in einem zweiten Arbeitsgang die Fläche zu bürsten, um den angelösten Schmutz abzubürsten. Dieser kann dann in einem dritten Arbeitsgang abgespült werden. Dies führt dazu, dass der Flugkörper nur mit dem Gewicht belastet wird, das für einen speziellen Reinigungsgang unbedingt notwendig ist. Der Flugkörper kann somit beispielsweise zunächst nur mit einem Flüssigkeitstank und einer Auftragsdüse gekoppelt werden und danach zusätzlich oder alternativ mit einer Bürste oder einem Bürstensystem. Auch die Ortungseinrichtungen können so zur Verfügung gestellt werden, dass je nach Einsatz unterschiedliche Ortungseinrichtungen am Flugobjekt angekoppelt werden. Dieser An- und Abkopplungsvorgang erfolgt vorzugsweise automatisch. Dadurch entsteht ein vorzugsweise modulares System einer fliegenden Reinigungseinrichtung zur Reinigung von Fassaden.

Die Reinigungsvorrichtung ist darauf ausgerichtet, den Reinigungsprozess möglichst autonom ablaufen zu lassen. Eine Reinigungskraft sollte nur noch eine überwachende Funktion ausüben und im Notfall und zum Auffüllen oder Austauschen der Reinigungsbehälter eingesetzt werden.

Hierfür wird ein Sensorkonzept vorgeschlagen, mit dem die Pose der Reinigungseinrichtung absolut und relativ zur zu reinigenden Fläche ermittelt werden kann.

Bei Gebäuden mit einem oder bis zu 10 Stockwerken wird von der Reinigungskraft in einer festen Distanz vor die Fassade ein Marken-Teppich ausgelegt. Diese Marken werden mit einer am Flugkörper befestigten Kamera erfasst, um die Pose der Reinigungseinrichtung relativ zur Fassade zu bestimmen. Diese Pose bildet die Grundlage des gesamten Reinigungsprozesses. Im Nahbereich zur Reinigungsfläche bzw. bei direktem Kontakt braucht die Reinigungsvorrichtung allerdings mehr Daten, da die mit dem Markenteppich ermittelte Pose kleine Fehler aufweisen kann. Hier werden dann Ultraschall und/oder optische Abstands- und Geschwindigkeitsmesseinrichtungen verwendet. LIDAR-Systeme senden Laserimpulse aus und detektieren das zurückgestreute Licht. Aus der Lichtlaufzeit der Signale wird die Entfernung zum Ort der Streuung berechnet. LIDAR-Systeme dienen zur Objekterkennung und Umgebungserfassung und werden bei der Reinigungsvorrichtung zur exakten Bestimmung des Abstandes zur Reinigungsfläche genutzt.

Die Tastsensoren dienen dann im letzten Schritt dazu, den Kontakt zwischen Reinigungsvorrichtung und Fläche festzustellen. Anhand dieser Daten hält ein Regler die Reinigungseinrichtung in einer leicht schrägen Pose, so dass eine relativ leichte Kraft der Reinigungsvorrichtung gegen die Reinigungsfläche ausgeübt wird. Dabei wird die Geschwindigkeit, mit der die Reinigungsvorrichtung nach vorne fliegt beim Anstoßen an der Fläche zu einem Druck, der von der Reinigungsvorrichtung auf die Fläche ausgeübt wird.

Bei größeren Gebäuden ist die Erfassung von Marken am Boden nicht mehr möglich. Hierbei werden weitere Sensoren benötigt. Ein zugrunde liegendes Modell des Gebäudes kann dabei zur Lokalisierung, also zur Bestimmung der Pose der Reinigungseinrichtung genutzt werden. Ein solches Modell kann entweder im Vorhinein selbst erstellt werden oder z.B. durch ein bekanntes CAD-File des Gebäudes eingebunden werden. Zur Selbst-Erstellung eines solchen Modells kann ein kooperatives Roboter- Boden-Luft System genutzt werden. Hierbei kann der Flugkörper mit einem 3D-LIDAR System ausgestattet sein. Dieses 3D-LIDAR System wird auch zur Bestimmung der Pose anhand des Modells verwendet.

Zusätzliche Sensorik stellen RGB-D Tiefenkameras und Windgeschwindigkeits-Sensoren dar. Mit RGB-D Kameras kann der direkte Bereich der Reinigungseinrichtung dreidimensional erfasst werden. Dadurch kann eine autonome Navigation der Reinigungseinrichtung auch bei einer nicht komplett planen Reinigungsfläche erfolgen. Eine Erfassung der zu reinigenden Fläche in Bezug auf die Topologie der Umgebung ermöglicht es auch Fahnenmasten, Skulpturen, Vorsprünge, Fensterbänke, Balkone usw. zu erfassen, um einerseits mit diesen Objekten nicht zu kollidieren und andererseits sich an diesen stationären Objekten zu orientieren.

Eine Messung der Windgeschwindigkeit bevorzugt an der Reinigungseinrichtung ist gerade in relativ großen Höhen wichtig. Somit hat die Reinigungskraft die Möglichkeit, auf eine Veränderung der Windgeschwindigkeit in der Höhe der Reinigungseinrichtung zeitnah zu reagieren.

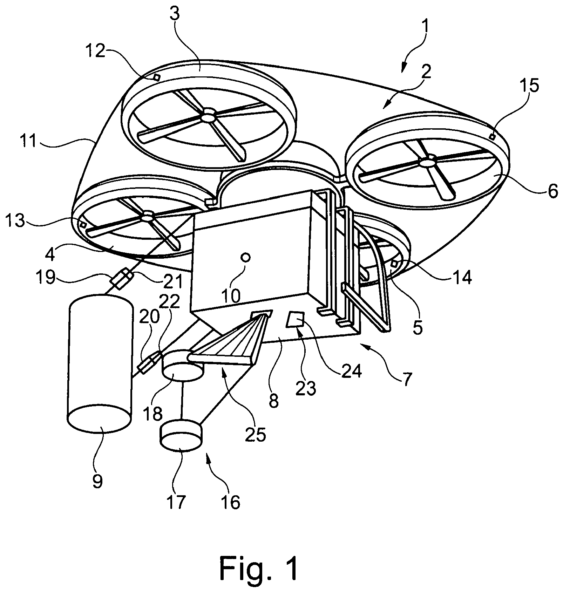

Drei Ausführungsbeispiele sind in der Zeichnung dargestellt und werden im Folgenden näher beschrieben. Es zeigt
- Figur 1: schematisch den Aufbau einer Reinigungsvorrichtung mit vier Rotoren,
- Figur 2: eine Seitenansicht einer Reinigungsvorrichtung mit acht Rotoren,
- Figur 3: eine Draufsicht auf die in Figur 2 gezeigte Reinigungsvorrichtung,
- Figur 4: eine Ansicht von unten auf eine Reinigungseinrichtung mit drei Rotoren,
- Figur 5: eine Ansicht von oben auf die in Figur 4 gezeigte Reinigungseinrichtung,
- Figur 6: eine Seitenansicht der in Figur 4 gezeigten Reinigungseinrichtung,
- Figur 7: eine Seitenansicht der in Figur 4 gezeigten Reinigungseinrichtung mit Markerteppich,
- Figur 8: eine Draufsicht gemäß Figur 7,

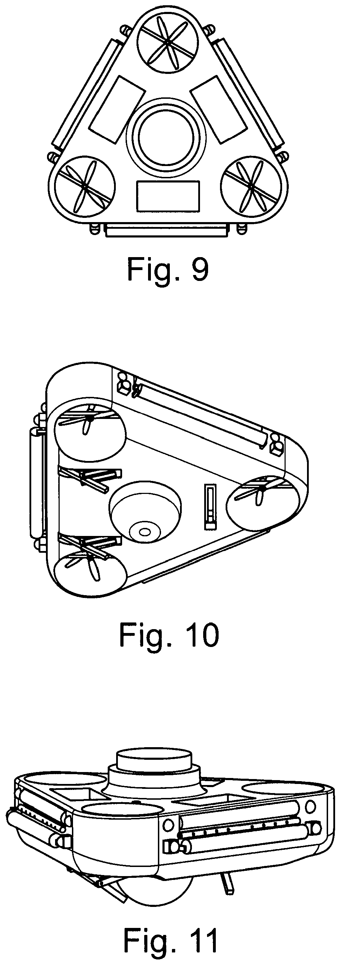

- Figur 9: eine perspektivische Draufsicht auf die in Figur 4 gezeigte Reinigungseinrichtung,
- Figur 10: eine perspektivische Ansicht der Unterseite der in Figur 4 gezeigten Reinigungseinrichtung und
- Figur 11: eine perspektivische Seitenansicht der in Figur 4 gezeigten Reinigungseinrichtung.

Die Reinigungsvorrichtung 1 weist einen Flugkörper 2 mit Rotoren 3, 4, 5, 6 auf. An diesem Flugkörper 2 ist eine Reinigungseinrichtung 7 zum Reinigen einer Fläche (nicht gezeigt) angebracht.

Die Reinigungseinrichtung 7 besteht aus einem Grundkörper 8, an den Reinigungsgeräte wie beispielsweise eine rotierende Bürste 9 angebracht sind. Anstelle einer rotierenden Bürste 9 können auch mehrere rotierende Bürsten 9 um den Grundkörper 8 herum angeordnet sein.

Darüber hinaus ist in den Grundkörper 8 eine Kamera 10 integriert. Anstelle einer Kamera 10 können auch mehrere Kameras oder eine Kamera mit mehreren Optiken am Flugkörper angeordnet sein.

Um Kollisionen mit Menschen und Gegenständern zu vermeiden ist am Flugkörper 2 ein Sicherheitsrahmen 11 zum Schutz der Rotoren 3, 4, 5 und 6 vorgesehen.

Zur Abstandsmessung und/oder Kontaktdetektion sind am Flugkörper 2 Sensoren 12 bis 15 vorgesehen, die gemeinsam eine Sensorik bilden.

Um einen konstanten Abstand zu einer zu reinigenden Fläche einzuhalten, ist eine auf Rollen fahrbare Einrichtung 16 vorgesehen, die zwischen dem Grundkörper 8 der zu reinigenden Fläche derart angeordnet ist, dass die Rollen 17, 18 auf der zu reinigenden Flächen abrollen, während sich die Reinigungsvorrichtung 7 relativ zur reinigenden Fläche bewegt. In der Figur sind nur zwei Rollen 17 und 18 gezeigt. Vorteilhaft ist es wenn am Umfang des Flugkörpers 2 noch weitere Rollen angeordnet sind.

Die Bürsten 9 der Reinigungseinrichtung 7 können beweglich zum Flugkörper 2 angeordnet sein. Hierzu dienen Pufferelemente 19, 20 mit Abstandsmessern 21, 22. Anstelle der Abstandsmesser oder zusätzlich zu den Abstandsmessern kann auch eine Druckmesseinrichtung (nicht gezeigt) vorgesehen sein, um den von den Bürsten 9 der Reinigungseinrichtung 7 auf den Flugkörper 2 wirkenden Druck zu messen.

Im Grundkörper ist eine Elektronik 23 vorgesehen, die auch Messeinrichtungen 24 zur Steuerung der Pose des Flugkörpers 2 aufweist.

Eine Düse 25 erlaubt es ein Reinigungsmedium wie beispielsweise entionisiertes Wasser oder Trockeneis auf die zu reinigende Fläche wie beispielsweise eine Fassade aufzubringen.

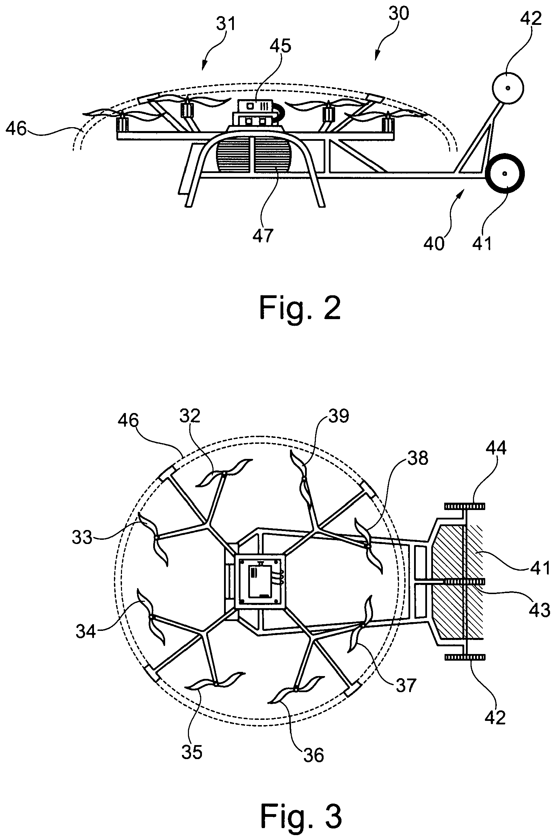

Die in den Figuren 2 und 3 gezeigte Reinigungsvorrichtung 30 hat einen Flugkörper 31 und acht Rotoren 32 bis 39. Am Flugkörper 31 ist eine Reinigungseinrichtung 40 angebracht, die eine rotierende Bürste 41 und drei Abstandshalteräder 42, 43 und 44 aufweist. An der Reinigungseinrichtung ist eine Kamera 45 angeordnet und über die Rotoren ist ein Sicherheitsrahmen 46 gespannt, der eine Kollision der Rotoren mit einer Person oder einer zu reinigenden Fläche vermeiden soll. Die Reinigungseinrichtung 31 weist ein Reinigungsmittelreservoir 47 auf, in dem als Reinigungsmedium entionisiertes Wasser oder Trockeneis transportiert werden kann.

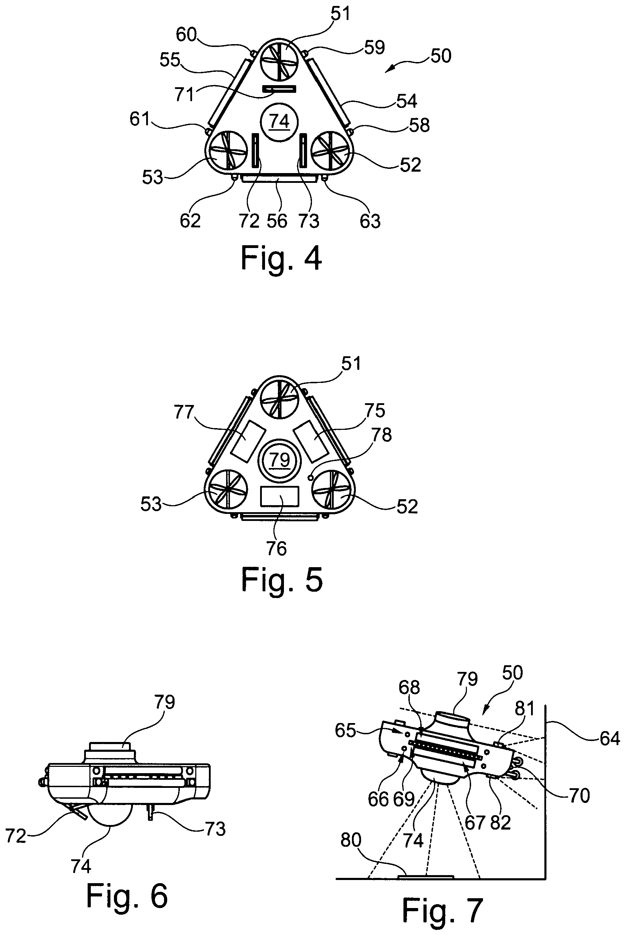

Die Figur 4 zeigt eine Reinigungsvorrichtung 50 mit drei Rotoren 51, 52 und 53. Zwischen diesen Rotoren ist jeweils eine Reinigungsbürste 54, 55, 56 an der Außenseite des Grundkörpers 57 angeordnet. Seitlich der Reinigungsbürsten sind jeweils Tastsensoren 58 bis 63 vorgesehen, um den Abstand zwischen dem Grundkörper 57 und einer zu reinigenden Fläche 64 zu ermitteln. Die Tastsensoren können jeweils als Sensorpaar 65, 66 wie in Figur 7 exemplarisch dargestellt ausgebildet sein. Auch die Reinigungsbürsten sind vorzugsweise als Bürstenpaar 67, 68 ausgebildet. Dies ermöglicht es, zwischen zwei Bürsten eine Wasserzuführung 69, 70 vorzusehen, durch die ionisiertes Wasser gegen die zu reinigende Fläche 64 gesprüht werden kann.

An der Unterseite der Reinigungsvorrichtung 50 ist auch ein einklappbares Landegestell mit drei Landefüßen 71, 72 und 73 vorgesehen, die zumindest beim Landevorgang ausgeklappt werden können. In der Mitte des Grundkörpers 57 ist ein Sensormodul 74 vorgesehen, das eine RGBD-Kamera und ein 1D-LIDAR aufweist.

In der Draufsicht erkennt man die entgegengesetzt rotierenden Rotoren 51, 52 und 53 und dazwischen jeweils ein Batteriewechselsystem 75, 76 und 77. Im Inneren des Grundkörpers 57 befindet sich ein Wassertank (nicht gezeigt), der durch die Öffnung 78 zugänglich ist. An der Oberseite des Grundkörpers 57 ist ein weiteres Sensormodul 79 vorgesehen, das eine RGBD-Kamera und ein 2D-LIDAR aufweist.

Mit dem Sensormodul 74 kann die Pose der Reinigungsvorrichtung 50 relativ zu einem Markerteppich 80 bestimmt werden und die Ultraschallsensoren 81, 82 ermöglichen es, die relative Pose der Reinigungsvorrichtung 50 in Bezug auf die zu reinigende Fläche 64 festzulegen.

Beim Anflug der Reinigungsvorrichtung 50 an die zu reinigende Fläche 64 ist die Reinigungsvorrichtung 50 leicht geneigt, um sich mit den Rotoren 51 bis 53 zur zu reinigenden Fläche 64 hin zu bewegen. Sowie die Bürsten 67, 68 an der zu reinigenden Fläche 64 anliegen, bestimmt die Schräglage der Vorrichtung 50 den Anpressdruck an die zu reinigende Fläche 64. Die Reinigungsbürsten sind wie in Figur 7 gezeigt flexibel gelagert, sodass auch bei einer Schräglage der Reinigungsvorrichtung 50 relativ zur zu reinigenden Fläche 64 beide übereinander liegenden Bürsten 67 und 68 an der zu reinigenden Fläche anliegen können.

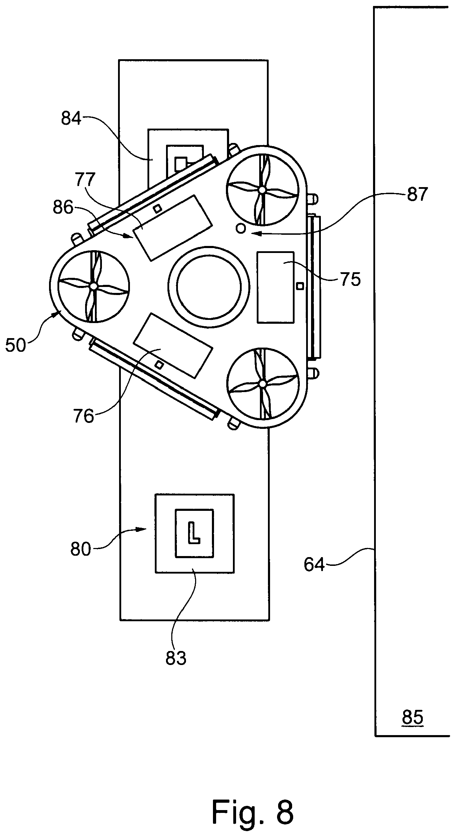

In Figur 8 ist der Markierungsteppich 80 in der Draufsicht zu erkennen, sodass auch die Markierungen 83, 84 sichtbar sind. Die zu reinigende Fläche 64 ist ein Teil eines Gebäudes 85, vor dem der Markierungsteppich 80 ausgelegt werden kann. Anstelle eines Markierungsteppichs können auch markante vorhandene Markierungspunkte, beispielsweise im Bodenbereich oder am Gebäude 85, für die Positionierung der Reinigungsvorrichtung 50 verwendet werden. Der Markierungsteppich dient im vorliegenden Fall auch als Landefläche und bei gelandeter Reinigungsvorrichtung 50 sind die Batteriewechselsysteme 57, 67 und 77 an der Oberseite 86 der Reinigungsvorrichtung 50 ebenso wie die Öffnung 87 zum Wassertank leicht zugänglich.

## Patentansprüche

1. Reinigungsvorrichtung (1) zum Reinigen einer Fläche frei schwebend ohne feste Verbindung zwischen der Reinigungsvorrichtung und der Fläche, wobei die Reinigungsvorrichtung einen Flugkörper (2) mit Rotoren (3, 4, 5, 6) und eine am Flugkörper (2) befestigte Reinigungseinrichtung (7) zum Reinigen der Fläche aufweist, ***dadurch gekennzeichnet, dass*** die Reinigungseinrichtung (7) beweglich zum Flugkörper (2) angeordnet ist und der Flugkörper (2) einen Abstandsmesser (21, 22) aufweist, der den Abstand der Reinigungseinrichtung (7) zum Flugkörper misst, oder eine Druckmesseinrichtung aufweist, die den von der Reinigungseinrichtung (7) auf den Flugkörper (2) wirkenden Druck misst.

2. Reinigungsvorrichtung nach einem der vorhergehenden Ansprüche, ***dadurch gekennzeichnet, dass*** die Reinigungseinrichtung (7) mindestens eine rotierende Bürste (9) aufweist.

3. Reinigungsvorrichtung nach einem der vorhergehenden Ansprüche, ***dadurch gekennzeichnet, dass*** sie eine Kamera (10) aufweist.

4. Reinigungsvorrichtung nach einem der vorhergehenden Ansprüche, ***dadurch gekennzeichnet, dass*** der Flugkörper (2) einen Sicherheitsrahmen (11) zum Schutz der Rotoren (3, 4, 5, 6) aufweist.

5. Reinigungsvorrichtung nach einem der vorhergehenden Ansprüche, ***dadurch gekennzeichnet, dass*** der Flugkörper (2) eine Sensorik (12, 13, 14, 15) zur Abstandsmessung und/oder Kontaktdetektion aufweist.

6. Reinigungsvorrichtung nach einem der vorhergehenden Ansprüche, ***dadurch gekennzeichnet, dass*** sie eine auf Rollen (17, 18) verfahrbare Einrichtung (16) aufweist.

7. Reinigungsvorrichtung nach einem der vorhergehenden Ansprüche, ***dadurch gekennzeichnet, dass*** sie Messeinrichtungen (24) aufweist, die die Steuerung der Pose des Flugkörpers (2) beeinflussen.

8. Verfahren zum Reinigen von Flächen mit einer Reinigungsvorrichtung nach einem der vorhergehenden Ansprüche, insbesondere von Fassaden und von Glasfronten im Außenbereich, bei dem mit dem Flugkörper (2) ein Reinigungsmedium zur Reinigung auf die zu reinigende Fläche aufgebracht wird.

9. Verfahren nach dem vorhergehenden Verfahrensanspruch, ***dadurch gekennzeichnet, dass*** das Reinigungsmedium entionisiertes Wasser ist.

10. Verfahren nach einem der vorhergehenden Verfahrensansprüche, ***dadurch gekennzeichnet, dass*** das Reinigungsmedium Trockeneis ist.

11. Verfahren nach einem der vorhergehenden Verfahrensansprüche, ***dadurch gekennzeichnet, dass*** die relative Pose des Flugkörpers (2) in Bezug auf die zu reinigende Fläche gemessen wird.

12. Verfahren nach einem der vorhergehenden Verfahrensansprüche, ***dadurch gekennzeichnet, dass*** die absolute Pose des Flugkörpers seine in Bezug auf die zu reinigende Fläche gemessen wird.

13. Verfahren nach einem der vorhergehenden Verfahrensansprüche, ***dadurch gekennzeichnet, dass*** der Flugkörper derart gegen die zu reinigende Fläche geflogen wird, dass eine am Flugkörper (2) befestigte Reinigungseinrichtung (7) gegen die zu reinigende Fläche gedrückt und an der Fläche entlang bewegt wird.

14. Reinigungssystem aus einer Reinigungsvorrichtung gemäß einem der Ansprüche 1 bis 9, mehreren zu reinigenden Flächen und einer die zu reinigenden Flächen umgebenden Topologie, bei dem in einem Datenspeicher Bezugspunkte der Topologie gespeichert werden, die Pose der Reinigungsvorrichtung relativ zu diesen Bezugspunkten und die Pose der Reinigungsvorrichtung in Bezug auf die zu reinigende Fläche ermittelt werden, um die Reinigungseinrichtung automatisch an den zu reinigenden Flächen entlang zu führen.

## Claims

1. Cleaning device (1) for cleaning a surface in a freely-hovering manner without a firm connection between the cleaning device and the surface, wherein the cleaning device comprises a flying object (2) with rotors (3, 4, 5, 6) and, attached to the flying object (2), a cleaning system (7) for cleaning the surface, ***characterised in that*** the cleaning system (7) is arranged movably with regard to the flying object (2) and the flying object (2) has a distance meter (21, 22) which measures the distance between the cleaning device (7) and the flying object, or has a pressure measuring device which measures the pressure of the cleaning system (7) acting on the flying object (2).

2. Cleaning device according to any one of the preceding claims ***characterised in that*** the cleaning device (7) comprises at least one rotating brush (9).

3. Cleaning device according to any one of the preceding claims ***characterised in that*** it has a camera (10).

4. Cleaning device according to any one of the preceding claims ***characterised in that*** the flying object (2) has a safety frame (11) for protecting the rotors (3, 4, 5, 6).

5. Cleaning device according to any one of the preceding claims ***characterised in that*** the flying object (2) has sensors (12, 13, 14, 15) for distance measurement and/or contact detection.

6. Cleaning device according to any one of the preceding claims ***characterised in that*** it comprises a device (16) displaceable on rollers (7, 18).

7. Cleaning device according to any one of the preceding claims ***characterised in that*** it comprises measuring devices (24) that influence control of the pose of the flying object (2).

8. Method of cleaning surfaces with a cleaning device according to any one of the preceding claims, in particular facades and outdoor glass frontages, in which by way of the flying object (2) a cleaning medium for cleaning is applied to the surface to be cleaned.

9. Method according to the preceding method claim ***characterised in that*** the cleaning medium is deionised water.

10. Method according to any one of the preceding method claims ***characterised in that*** the cleaning medium is dry ice.

11. Method according to any one of the preceding method claims ***characterised in that*** the relative pose of the flying object (2) in relation to the surface to the cleaned is measured.

12. Method according to any one of the preceding method claims ***characterised in that*** the absolute pose of the flying object in relation to the surface to be cleaned is measured.

13. Method according to any one of the preceding method claims ***characterised in that*** the flying object is flown toward the surface to be cleaned in such a way that a cleaning system (7) attached to the flying object (2) is pressed against the surface to be cleaned and moved along the surface.

14. Cleaning system of a cleaning device according to any one of claims 1 to 9, a plurality of surfaces to be cleaned and a topology surrounding the surfaces to be cleaned, in which in a data memory reference points of the topology are stored, the pose of the cleaning device relative to these reference points and the pose of the cleaning device in relation to the surface to be cleaned are determined in order automatically guide the cleaning device along the surfaces to be cleaned.

## Revendications

1. Dispositif de nettoyage (1), destiné à nettoyer une surface de manière flottante, sans liaison fixe entre le dispositif de nettoyage et la surface, le dispositif de nettoyage comportant un élément volant (2) pourvu de rotors (3, 4, 5, 6) et un système de nettoyage (7) destiné à nettoyer la surface, fixé sur l'élément volant (2), ***caractérisé en ce que*** le système de nettoyage (7) est placé en étant mobile par rapport à l'élément volant (2) et **en ce que** l'élément volant comporte (2) un dispositif de mesure de distance (21, 22) qui mesure l'écart entre le système de nettoyage (7) et l'élément volant ou comporte un dispositif de mesure de la pression qui mesure la pression exercée par le système de nettoyage (7) sur l'élément volant (2).

2. Dispositif de nettoyage selon l'une quelconque des revendications précédentes, ***caractérisé en ce que*** le système de nettoyage (7) comporte au moins une brosse (9) rotative.

3. Dispositif de nettoyage selon l'une quelconque des revendications précédentes, ***caractérisé en ce qu**'*il comporte une caméra (10).

4. Dispositif de nettoyage selon l'une quelconque des revendications précédentes, ***caractérisé en ce que*** l'élément volant (2) comporte un cadre de sécurité (11) pour la protection des rotors (3, 4, 5, 6).

5. Dispositif de nettoyage selon l'une quelconque des revendications précédentes, ***caractérisé en ce que*** l'élément volant (2) comporte un système de capteurs (12, 13, 14, 15) pour la mesure de la distance et/ou pour la détection de contact.

6. Dispositif de nettoyage selon l'une quelconque des revendications précédentes, ***caractérisé en ce qu**'*il comporte un système (16) déplaçable sur roulettes (17, 18).

7. Dispositif de nettoyage selon l'une quelconque des revendications précédentes, ***caractérisé en ce qu**'*il comporte des systèmes de mesure (24) qui influencent la commande de la pose de l'élément volant (2).

8. Procédé, destiné à nettoyer des surfaces, notamment des façades ou des frontons en verre en extérieur à l'aide d'un dispositif de nettoyage selon l'une quelconque des revendications précédentes, lors duquel à l'aide de l'élément volant (2), un agent nettoyant destiné au nettoyage est appliqué sur la surface à nettoyer.

9. Procédé selon la revendication précédente concernant le procédé, ***caractérisé en ce que*** l'agent nettoyant est de l'eau désionisée.

10. Procédé selon l'une quelconque des revendications précédentes concernant le procédé, ***caractérisé en ce que*** l'agent nettoyant est de la glace carbonique.

11. Procédé selon l'une quelconque des revendications précédentes concernant le procédé, ***caractérisé en ce que*** la pose relative de l'élément volant (2) par rapport à la surface à nettoyer est mesurée.

12. Procédé selon l'une quelconque des revendications précédentes concernant le procédé, ***caractérisé en ce que*** la pose absolue de l'élément volant par rapport à la surface à nettoyer est mesurée.

13. Procédé selon l'une quelconque des revendications précédentes concernant le procédé, ***caractérisé en ce qu*'**on fait voler l'élément volant contre la surface à nettoyer de telle sorte qu'un système de nettoyage (7) fixé sur l'élément volant (2) soit pressé contre la surface à nettoyer et se déplace le long de la surface.

14. Système de nettoyage, constitué d'un dispositif de nettoyage selon l'une quelconque des revendications 1 à 9, de plusieurs surfaces à nettoyer et d'une topologie cernant les surfaces à nettoyer, sur lequel dans une mémoire de données sont mémorisés des points de référence de la topologie, la pose du dispositif de nettoyage par rapport auxdits points de référence et la pose du dispositif de nettoyage par rapport à la surface à nettoyer sont déterminées, pour guider automatiquement le système de nettoyage sur les surfaces à nettoyer.
